# EUROPÄISCHE PATENTSCHRIFT

(11) **EP 2 176 085 B1**
(45) Veröffentlichungstag und Bekanntmachung des Hinweises auf die Patenterteilung: **29.07.2015**
(21) Anmeldenummer: 08759206.9
(22) Anmeldetag: 12.06.2008
(51) Int. Cl.: B60K 6/48, B60K 6/52, B60K 6/26, B60K 6/38, B60K 6/40, B60K 6/445, B60K 6/547

(54) **ANTRIEBSSTRANG FÜR EIN KRAFTFAHRZEUG**
DRIVE TRAIN FOR A MOTOR VEHICLE
TRAIN D'ENTRAÎNEMENT POUR VÉHICULE AUTOMOBILE

(30) Priorität: 14.08.2007 DE 102007039370
(43) Veröffentlichungstag der Anmeldung: 21.04.2010
(73) Patentinhaber: GETRAG Getriebe- und Zahnradfabrik Hermann Hagenmeyer GmbH & Cie KG, 74199 Untergruppenbach (DE)
(72) Erfinder: KNOBLAUCH, Daniel, 74199 Untergruppenbach (DE); KNOEDEL, Ulrich, 74379 Ingersheim (DE); SCHAD, Nicolas, 97922 Lauda-Königshofen (DE)
(74) Vertreter: Witte, Weller & Partner Patentanwälte mbB
(86) Internationale Anmeldenummer: PCT/EP2008/004704
(87) Internationale Veröffentlichungsnummer: WO 2009/021574

(56) Entgegenhaltungen:
- EP-A- 1 296 440
- AT-U1- 6 377
- DE-A1-102005 049 992

## Beschreibung

Die vorliegende Erfindung betrifft einen Antriebsstrang für ein Kraftfahrzeug, das eine erste und eine zweite Achse aufweist, wobei eine Antriebseinheit im Bereich der ersten Achse angeordnet ist und wobei der Antriebsstrang ferner eine elektrische Maschine aufweist, die mit der zweiten Achse verbindbar ist.

Auf dem Gebiet der Kraftfahrzeuge, insbesondere auf dem Gebiet der Personenkraftwagen, besteht ein Trend hin zu Allradfahrzeugen, bei denen sowohl die erste als auch die zweite Achse mit Antriebsleistung versorgt werden kann. Klassisch erfolgt dies mechanisch über ein Verteilergetriebe, das die Antriebsleistung auf die erste und die zweite Achse verteilt. Das Verteilergetriebe kann beispielsweise ein Längsdifferenzial aufweisen, das die Antriebsleistung in einem festen Verhältnis auf die zwei Achsen verteilt, oder eine Hang-On-Kupplung, mittels der Antriebsleistung zu einer der zwei Achsen nur bei Bedarf zugeführt wird.

Ein weiterer Trend auf dem Gebiet der Kraftfahrzeuge sind Hybrid-Antriebsstränge, die sowohl einen Verbrennungsmotor als auch eine elektrische Maschine aufweisen. Hierbei ist es bekannt, die erste Achse mittels der Antriebseinheit anzutreiben, die einen Verbrennungsmotor aufweist, und die zweite Achse mittels einer elektrischen Maschine anzutreiben.

In diesem Fall ist die elektrische Maschine im Bereich der zweiten Achse angeordnet.

Es sind auch Systeme bekannt, bei denen eine elektrische Maschine im Bereich der Antriebseinheit angeordnet ist, wobei die von der elektrische Maschine bereitgestellte Leistung über eine Kardanwelle zu der zweiten Achse übertragen wird.

Das Dokument AT 6377 U1 wird als nächstliegender Stand der Technik angesehen und zeigt die Merkmale der Präambel des unabhängigen Anspruchs 1.

Vor dem obigen Hintergrund ist es die Aufgabe der Erfindung, einen Hybrid-Antriebsstrang für ein allradgetriebenes Kraftfahrzeug anzugeben, wobei der Antriebsstrang vom Bauraum her günstig integrierbar ist und eine gute Gewichtsverteilung ermöglicht.

Diese Aufgabe wird durch einen Antriebsstrang für ein Kraftfahrzeug gelöst, das eine erste und eine zweite Achse aufweist, wobei eine Antriebseinheit im Bereich der ersten Achse angeordnet ist, wobei der Antriebsstrang ferner eine elektrische Maschine aufweist, die mit der zweiten Achse verbindbar ist und wobei die elektrische Maschine in Längsrichtung koaxial zu einer Eingangswelle eines Querdifferenzials der zweiten Achse angeordnet ist.

Die elektrische Maschine kann folglich im Bereich der zweiten Achse angeordnet werden, so dass sich eine gute Gewichtsverteilung realisieren lässt. Ferner kann der zur Verfügung stehende Bauraum durch die koaxiale Anordnung der elektrischen Maschine gut ausgenutzt werden. Zudem kann die zweite Achse mit dem Querdifferenzial im Wesentlichen identisch ausgebildet werden zu einer bereits in Serie gebauten, konventionellen Allradvariante des Fahrzeugs.

Im vorliegenden Zusammenhang soll der Begriff "verbinden" bedeuten, dass zwei Bauteile entweder starr direkt miteinander verbunden oder aber auch indirekt verbunden sind. Unter einer Verbindung soll folglich verstanden werden, dass über die Verbindung ein Leistungsfluss fließen kann. Der Begriff "angeordnet" soll, je nach Zusammenhang, sowohl räumlich verstanden werden, als auch so, dass über die so geschaffene Anordnung ein Leistungsfluss erfolgen kann.

Die obige Aufgabe wird somit vollkommen gelöst.

Vorzugsweise ist der elektrischen Maschine ein Planetenradsatz als Untersetzungsstufe zugeordnet.

Hierdurch lassen sich elektrische Maschinen verwenden, die mit relativ hohen Drehzahlen arbeiten und folglich kompakt bauen. Ein Planetenradsatz ermöglicht zudem auch hohe Untersetzungen und lässt sich koaxial leicht in einen Antriebsstrang integrieren.

So ist es von besonderem Vorzug, wenn der Planetenradsatz koaxial zu der elektrischen Maschine angeordnet ist.

Dabei ist es besonders vorteilhaft, wenn ein Sonnenrad des Planetenradsatzes starr oder schaltbar mit einer Ausgangswelle der elektrischen Maschine verbunden ist.

Dies ermöglicht eine baulich günstige Einbindung des Planetenradsatzes in eine koaxiale Anordnung aus elektrischer Maschine und Abtriebsgliedern.

Insgesamt ist es bevorzugt, wenn der elektrischen Maschine eine Schaltkupplung zugeordnet ist, mittels der die elektrische Maschine mit einer Kardanwelle verbindbar ist, die die erste und die zweite Achse miteinander verbindet.

Bei dieser Ausführungsform kann die Kardanwelle dazu verwendet werden, eine Verbindung zwischen der elektrischen Maschine und der Antriebseinheit einzurichten.

Dies ermöglicht eine Vielzahl von Betriebsarten des Hybrid-Antriebsstranges. Ferner kann über die Kardanwelle ggf. Leistung von der Antriebseinheit (die typischerweise einen Verbrennungsmotor beinhaltet) an die zweite Achse übertragen werden.

Besonders bevorzugt ist es hierbei, wenn der Planetenradsatz zwischen der elektrischen Maschine und der Schaltkupplung angeordnet ist.

Dies ermöglicht eine konstruktiv günstige Anbindung des Planetenradsatzes an der elektrischen Maschine.

Alternativ hierzu ist es auch möglich, die Schaltkupplung zwischen der elektrischen Maschine und dem Planetenradsatz anzuordnen.

Bei dieser Ausführungsform kann der Planetenradsatz günstig auch mit anderen Bauteilen des Antriebsstranges gekoppelt werden.

Vorteilhaft ist es insgesamt, wenn die Schaltkupplung eine Klauenkupplung mit einer Schiebemuffe ist, die in Längsrichtung bewegbar ist.

Bei dieser Ausführungsform kann die axiale Ausrichtung der elektrischen Antriebseinheit (mit der elektrischen Maschine, dem Planetenradsatz und der Schaltkupplung) generell günstig realisiert werden.

Besonders bevorzugt ist es dabei, wenn die Schaltkupplung mittels der elektrischen Maschine synchronisiert wird.

In diesem Fall wird die Klauenkupplung nur wenig beansprucht. Alternativ ist es natürlich auch denkbar, an Stelle der Klauenkupplung eine Schaltkupplung mit Synchronisierungseinrichtung vorzusehen.

Ferner ist es vorteilhaft, wenn die Schaltkupplung mittels eines Elektromagnetaktuators betätigt wird.

Vorteilhaft ist hierbei, dass es dann im Bereich der zweiten Achse nicht notwendig ist, hydraulische Steuerleitungen vorzusehen. An Stelle eines Elektromagnetaktuators ist auch ein anderer elektrisch betriebener Aktuator denkbar, wie ein Linearmotor.

Gemäß einer besonders bevorzugten Ausführungsform ist ein Ausgang der Antriebseinheit über eine zu der Eingangswelle des Querdifferenzials koaxiale Kardanwelle mit einem Eingangsglied einer Hang-On-Kupplung verbunden, deren Ausgangsglied mit der Eingangswelle des Querdifferenzials der zweiten Achse verbunden ist.

Bei dieser Ausführungsform ist vorteilhaft, dass Antriebsleistung von der Antriebseinheit über die Hang-On-Kupplung bei Bedarf auch zu der zweiten Achse übertragen werden kann. Ferner ergibt sich eine gute Gewichtsverteilung, da die Hang-On-Kupplung im Bereich der zweiten Achse angeordnet werden kann.

Von besonderem Vorteil ist es hierbei, wenn die Hang-On-Kupplung koaxial zu der Kardanwelle angeordnet ist.

Dies ermöglicht eine günstige Integration von Hang-On-Kupplung mit der koaxial hierzu ausgerichteten elektrischen Maschine.

Von besonderem Vorteil ist es, wenn die Hang-On-Kupplung in Richtung von der ersten zur zweiten Achse gesehen hinter der elektrischen Maschine angeordnet ist.

In diesem Fall kann relativ kostengünstig auch eine Variante des gleichen Kraftfahrzeuges realisiert werden, die im Bereich der zweiten Achse keine elektrische Maschine verwendet. Mit anderen Worten lässt sich hierbei die elektrische Maschine baulich gut an bereits vorhandene Komponenten anbinden.

Hierbei ist es vorteilhaft, wenn die elektrische Maschine einen als Hohlwelle ausgebildeten Rotor aufweist (bzw. einen Rotor, der an einer Hohlwelle festgelegt ist), wobei die Kardanwelle durch den Rotor hindurchgeführt ist.

Gemäß einer alternativen Ausführungsform ist die Hang-On-Kupplung in Richtung von der ersten zur zweiten Achse gesehen vor der elektrischen Maschine angeordnet.

Bei dieser alternativen Ausführungsform lassen sich sowohl Varianten realisieren, bei denen der Ausgang der elektrischen Maschine mit einem Eingangsglied der Hang-On-Kupplung verbindbar ist, als auch solche Varianten, bei denen der Ausgang der elektrischen Maschine mit einem Ausgangsglied der Hang-On-Kupplung verbindbar ist.

Vorteilhaft ist es hierbei ferner, wenn die elektrische Maschine einen als Hohlwelle ausgebildeten Rotor aufweist und wenn die Eingangswelle des Querdifferenzials der zweiten Achse durch den Rotor hindurchgeführt ist.

Bei dieser Ausführungsform kann insgesamt eine kompakte Antriebsanordnung im Bereich der zweiten Achse realisiert werden.

Vorteilhaft ist es auch, wenn eine Schaltkupplung und/oder ein Planetenradsatz, die der elektrischen Maschine zugeordnet sind, zwischen der elektrischen Maschine und der Hang-On-Kupplung angeordnet sind.

Auch bei dieser Ausführungsform kann eine kompakte Gruppierung der Bauelemente realisiert werden.

Es ist vorteilhaft, wenn ein Eingangsglied der Hang-On-Kupplung mit einem ersten Glied eines Planetenradsatzes starr verbunden ist, der der elektrischen Maschine zugeordnet ist.

Bei dieser Ausführungsform kann zum einen erreicht werden, dass die Hang-On-Kupplung in Richtung von der ersten zur zweiten Achse gesehen vor der elektrischen Maschine angeordnet ist. Zum zweiten kann erreicht werden, dass die Ausgangswelle der elektrischen Maschine mit der Kardanwelle verbindbar ist. Insgesamt ergibt sich so eine besonders kompakte Anordnung, wobei der Planetenradsatz von der Kardanwelle ständig angetrieben ist.

Von besonderem Vorteil ist es hierbei, wenn eine Ausgangswelle der elektrischen Maschine mit einem zweiten Glied des Planetenradsatzes mittels einer Schaltkupplung verbindbar ist.

Vorteilhaft ist es hierbei auch, wenn das erste Glied der Planetenträger des Planetenradsatzes ist und wenn das zweite Glied das Sonnenrad des Planetenradsatzes ist. Somit kann auf einfache Weise eine kompakte, gut axial verschachtelte Anordnung geschaffen werden.

Gemäß einer weiteren bevorzugten Ausführungsform ist die elektrische Maschine mittels einer Schaltkupplung mit einer Kardanwelle verbindbar, die die erste und die zweite Achse miteinander verbindet, wobei die Kardanwelle mittels einer Trennkupplung mit der Eingangswelle des Querdifferenzials verbindbar bzw. davon trennbar ist.

Bei dieser Ausführungsform ist es möglich, die elektrische Maschine mit Antriebsleistung von der Antriebseinheit auch während des Stillstandes des Fahrzeuges zu laden.

Besonders vorteilhaft ist es hierbei, wenn die Trennkupplung eine Hang-On-Kupplung ist, mittels der der zweiten Achse bei Bedarf Antriebsleistung zur Verfügung gestellt werden kann.

Dies setzt voraus, dass die Hang-On-Kupplung sich vollständig öffnen lässt, um im Falle des Ladens einer Batterie über die elektrische Maschine im Stillstand keine Antriebsleistung auf das Querdifferenzial der zweiten Achse zu übertragen.

Hierbei ist es auch vorteilhaft, wenn die Antriebseinheit ein Getriebe mit mehreren Gangstufen aufweist, wobei eine Gangstufe der elektrischen Maschine zugeordnet ist.

Dabei ist es von besonderem Vorteil, wenn das Getriebe ein Doppelkupplungsgetriebe mit zwei Teilgetrieben ist, wobei die der elektrischen Maschine zugeordnete Gangstufe in jenem Teilgetriebe vorgesehen ist, das nicht die gewöhnlich zum Anfahren verwendete Gangstufe aufweist.

Hierdurch kann das Doppelkupplungsgetriebe im Stillstand wie üblich auf einen Anfahrvorgang vorbereitet werden, indem die zum Anfahren vorbereitete Gangstufe geschaltet wird, typischerweise der erste Gang. Nichtsdestotrotz kann über das andere Teilgetriebe Antriebsleistung von der Antriebseinheit zu der elektrischen Maschine übertragen werden.

Gemäß einer weiteren insgesamt bevorzugten Ausführungsform ist der elektrischen Maschine eine Schaltkupplung zugeordnet, mittels der die elektrische Maschine mit der Eingangswelle des Querdifferenzials der zweiten Achse verbindbar ist.

Bei dieser Ausführungsform ist es möglich, auf eine mechanische Verbindung zwischen der ersten Achse und der zweiten Achse zu verzichten und der zweiten Achse Antriebsleistung allein aus der elektrischen Maschine zur Verfügung zu stellen.

Dabei ist es von besonderem Vorteil, wenn ein Rotor der elektrischen Maschine an einer Hohlwelle festgelegt und mittels der Schaltkupplung mit der Eingangswelle des Querdifferenzials verbindbar ist.

Obgleich es bei dieser Ausführungsform nicht unbedingt notwendig ist, den Rotor der elektrischen Maschine als Hohlwelle auszubilden (bzw. an einer Hohlwelle festzulegen), ist diese Ausführungsform hinsichtlich der Anordnung der Schaltkupplung vorteilhaft. Ferner kann die elektrische Maschine auch für solche Ausführungsformen verwendet werden, bei denen eine Kardanwelle vorgesehen ist, die die Hohlwelle dann durchsetzen kann.

Eine weitere vorteilhafte Ausführungsform sieht vor, dass eine Schaltkupplung und/ oder ein Planetenradsatz, die der elektrischen Maschine zugeordnet sind, in Richtung von der ersten zur zweiten Achse gesehen hinter der elektrischen Maschine angeordnet sind.

Hierbei kann die elektrische Antriebseinheit für die zweite Achse leicht an die Eingangswelle des Querdifferenzials angebunden werden.

Vorteilhaft ist es insgesamt ferner, wenn die elektrische Maschine als Innenläufer ausgebildet ist.

Auf diese Weise lässt sich insbesondere die Anordnung des Rotors an einer Hohlwelle relativ leicht realisieren. Zudem ist es möglich, die elektrische Maschine an einem Außenmantel zu kühlen, sofern dies notwendig ist.

Besonders bevorzugt ist es, wenn die erste Achse die Hinterachse und die zweite Achse die Vorderachse des Kraftfahrzeugs ist.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Figur 1: eine schematische Draufsicht auf einen Antriebsstrang gemäß einer ersten Ausführungsform der vorliegenden Erfindung;
- Figur 2: eine schematische Längsschnittansicht durch eine weitere Ausführungsform eines erfindungsgemäßen Antriebsstranges;
- Figur 3: eine schematische Längsschnittansicht durch eine weitere Ausführungsform einer erfindungsgemäßen Antriebseinheit;
- Figur 4: eine der Figur 3 vergleichbare Teilansicht einer weiteren Ausführungsform eines erfindungsgemäßen Antriebsstranges, wobei lediglich die Unterschiede zur Figur 3 dargestellt sind;
- Figur 5: eine schematische Draufsicht auf eine weitere alternative Ausführungsform eines erfindungsgemäßen Antriebsstranges;
- Figur 6: eine schematische Längsschnittansicht durch eine weitere alternative Ausführungsform eines erfindungsgemäßen Antriebsstranges; und
- Figur 7: eine der Figur 6 vergleichbare Darstellung einer alternativen Ausführungsform eines erfindungsgemäßen Antriebsstranges, wobei lediglich die Unterschiede von der Darstellung in Figur 6 gezeigt sind.

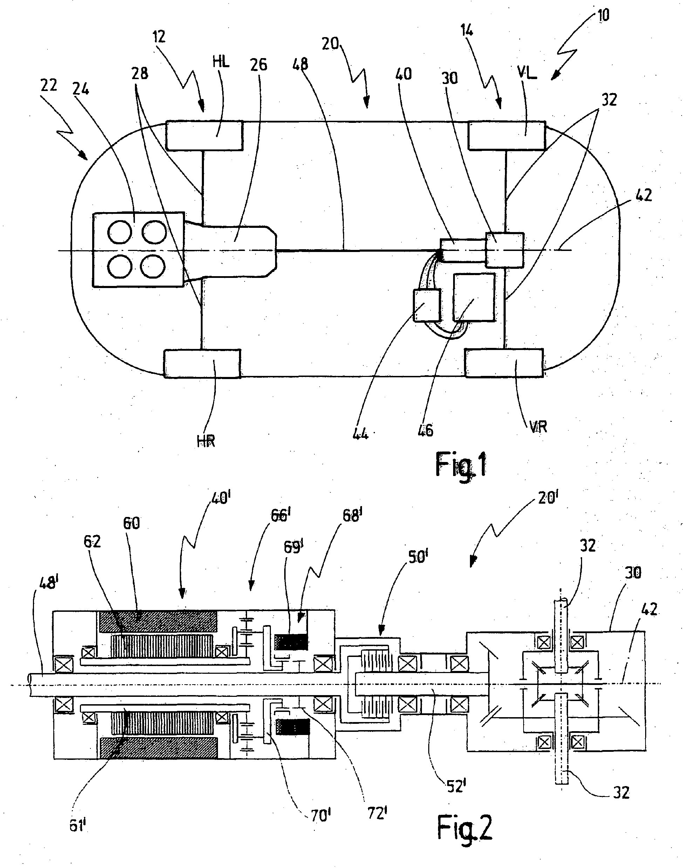

In Figur 1 ist ein Kraftfahrzeug in Form eines Personenkraftwagens generell mit 10 bezeichnet. Das Kraftfahrzeug 10 weist eine erste Achse 12 in Form einer Hinterachse und eine zweite Achse 14 in Form einer Vorderachse auf. Die Räder der Achsen sind mit VL, VR, HL, HR bezeichnet.

Das Kraftfahrzeug 10 weist einen Antriebsstrang 20 gemäß der vorliegenden Erfindung auf. Der Antriebsstrang 20 beinhaltet eine Antriebseinheit 22, die im Bereich der Hinterachse 12 angeordnet ist. Genauer gesagt weist die Antriebseinheit 22 einen Antriebsmotor 24 in Form eines Verbrennungsmotors auf, der in Fahrtrichtung gesehen hinter der Hinterachse 12 angeordnet ist. Eine andere Anordnung des Motors, wie z.B. ein Mittelmotorkonzept, ist hier ebenfalls denkbar. Die Antriebseinheit 22 beinhaltet ferner ein Stufengetriebe 26, vorzugsweise ein Doppelkupplungsgetriebe, das in Fahrtrichtung gesehen vor dem Antriebsmotor 24 angeordnet ist. Eine andere Anordnung des Getriebes, wie z.B. bei einem Mittelmotorkonzept, ist hier ebenfalls denkbar. Ferner ist im Bereich der Hinterachse 12 ein Querdifferenzial vorgesehen (nicht näher dargestellt), das mit einem Ausgang des Stufengetriebes 26 verbunden ist und Antriebsleistung auf die Abtriebswellen 28 der Hinterachse 12 verteilt.

Im Bereich der Vorderachse 14 ist ebenfalls ein mechanisches Querdifferenzial 30 vorgesehen, mittels dessen Antriebsleistung auf Abtriebswellen 32 verteilt wird.

Der Antriebsstrang 20 beinhaltet ferner eine elektrische Maschine 40, die im Bereich der Vorderachse 14 angeordnet ist, und zwar koaxial zu einer Eingangswelle des Querdifferenzials 30 der Vorderachse 14. In Figur 1 ist schematisch eine Längsachse 42 dargestellt. Man erkennt, dass die elektrische Maschine 40 koaxial zu dieser Längsachse 42 angeordnet ist, die mit der Eingangswelle des Querdifferenzials zusammenfällt.

Der Antriebsstrang 20 beinhaltet ferner eine Steuer/Leistungselektronik 44 für die elektrische Maschine 40, sowie eine Batterie 46, die mit der Steuer/Leistungselektronik 44 verbunden ist.

Der Antriebsstrang 20 beinhaltet ferner eine Kardanwelle 48, die sich von dem Ausgang der Antriebseinheit 22 in Richtung hin zu der Vorderachse 14 erstreckt. Die Kardanwelle 48 kann bei anderen Ausführungsformen auch weggelassen werden. Wenn eine Kardanwelle 48 vorhanden ist, ist die elektrische Maschine 40 vorzugsweise mit dieser verbindbar, um die Batterie 46 auch im Stillstand des Kraftfahrzeuges 10 laden zu können.

Im Folgenden werden alternative Ausführungsformen von Antriebssträngen erörtert, die generell hinsichtlich Aufbau und Konstruktion der Antriebsstränge der Figur 1 entsprechen. Im Folgenden werden lediglich Besonderheiten bzw. Unterschiede hierzu erläutert.

Figur 2 zeigt einen Antriebsstrang 20', bei dem die Kardanwelle 48' mittels einer Hang-On-Kupplung 50' mit der Eingangswelle 52' des Querdifferenzials 30 verbindbar ist.

Die Eingangswelle 52' ist eine in Längsrichtung 42 ausgerichtete Welle mit einem Antriebsrad, das mit einem angetriebenen Rad (Kegelrad) des Querdifferenzials 30 in Eingriff steht, wobei das angetriebene Rad starr mit einem Differenzialkorb des Querdifferenzials 30 verbunden ist.

Die elektrische Maschine 40' ist koaxial zu der Eingangswelle 52' angeordnet, und zwar in Fahrtrichtung gesehen hinter der Hang-On-Kupplung 50'. Die elektrische Maschine 40' ist als Innenläufer ausgebildet, mit einem Stator 60' und einem Rotor 62'. Der Rotor 62' ist an einer Hohlwelle 64' festgelegt, die von der Kardanwelle 48' durchsetzt ist.

In Fahrtrichtung gesehen vor der elektrischen Maschine 40' ist ein Planetenradsatz 66' vorgesehen, dessen Sonnenrad mit der Hohlwelle 64' des Rotors 62' verbunden ist. Das Hohlrad des Planetenradsatzes 66' ist an einem Gehäuse festgelegt. Der Planetenträger des Planetenradsatzes 66' ist mit einem Eingangsglied einer Schaltkupplung 68' verbunden, die in Fahrtrichtung gesehen vor dem Planetenradsatz 66' angeordnet ist. Ein Ausgangsglied der Schaltkupplung 68' ist mit der Kardanwelle 48' verbunden.

Die Schaltkupplung 68' ist als Klauenkupplung ausgebildet, mit einer in Längsrichtung 42 verschiebbaren Schiebemuffe. Die Schiebemuffe ist mittels eines elektrisch angesteuerten Aktuators betätigbar, vorzugsweise mittels eines Elektromagnetaktuators 69'.

Das Eingangsglied und das Ausgangsglied der Schaltkupplung 68' sind mit 70' bzw. 72' bezeichnet.

In den folgenden Darstellungen von weiteren Ausführungsformen und von erfindungsgemäßen Antriebssträngen haben der Planetenradsatz 66 und die Schaltkupplung generell einen identischen Aufbau, können jedoch relativ zueinander und zu anderen Bauteilen anders angeordnet sein. Die obige Beschreibung ist jedoch in gleichem Maße auf die nachfolgenden Ausführungsformen anwendbar.

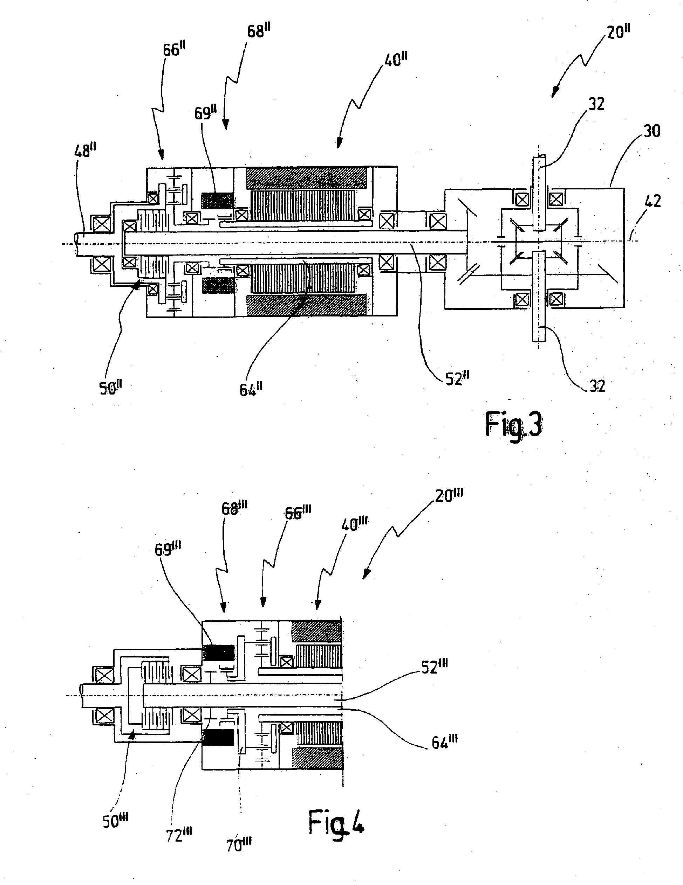

Figur 3 zeigt einen weiteren alternativen Antriebsstrang 20", bei dem die Hang-On-Kupplung 50" in Fahrtrichtung gesehen hinter der elektrischen Maschine 40" angeordnet ist. Das Eingangsglied der Hang-On-Kupplung 50" ist mit einer Kardanwelle 48" verbunden. Ferner ist das Eingangsglied der Hang-On-Kupplung 50" mit dem Planetenträger eines Planetenradsatzes 66" verbunden, der in Fahrtrichtung gesehen vor der Hang-On-Kupplung 50" angeordnet ist. Zwischen der elektrischen Maschine 40" und dem Planetenradsatz 66" ist eine Schaltkupplung 68" vorgesehen, die dazu ausgelegt ist, die Hohlwelle 64" des Rotors der elektrischen Maschine 40" mit dem Sonnenrad des Planetenradsatzes 66" zu verbinden oder hiervon zu trennen.

Ein Ausgangsglied der Hang-On-Kupplung 50" ist mit einer Eingangswelle 52" des Querdifferenzials 30 verbunden, die sich vom Querdifferenzial 30 durch die elektrische Maschine und durch die Schaltkupplung 68" und den Planetenradsatz 66" zu der Hang-On-Kupplung 50" erstreckt.

Figur 4 zeigt einen Antriebsstrang 20"', der vom grundsätzlichen Layout her dem Antriebsstrang 20" der Figur 3 entspricht. Nur die Unterschiede sind daher in Figur 4 dargestellt.

So ist bei dem Antriebsstrang 20'" die Hohlwelle 64'" des Rotors der elektrischen Maschine 40'" starr mit dem Sonnenrad eines Planetenradsatzes 66'" verbunden. Der Planetenträger des Planetenradsatzes 66'" ist mit einem Eingangsglied einer Schaltkupplung 68'" verbunden. Das Ausgangsglied 72"' ist mit der Eingangswelle 52"' des Querdifferenzials 30 verbunden. Die Schaltkupplung 68'" ist in Längsrichtung gesehen zwischen der Hang-On-Kupplung 50'" und dem Planetenradsatz 66'" angeordnet.

Bei dem Antriebsstrang 20'" ist die elektrische Maschine 40'" nur über die Hang-On-Kupplung 50'" mit der Antriebseinheit 22 verbindbar. Dies ermöglicht ggf. eine einfachere Ansteuerung der elektrischen Maschine 40"'.

Bei den in den Figuren 2 und 3 beschriebenen Ausführungsformen von erfindungsgemäßen Antriebssträngen 20', 20" kann die elektrische Maschine hingegen über die jeweilige Schaltkupplung mit der Kardanwelle 48 verbunden werden. Dies kann dazu genutzt werden, um im Betrieb eine Lastpunktverschiebung des Verbrennungsmotors 24 der Antriebseinheit 22 zu ermöglichen. Denn der Verbrennungsmotor 24 kann beispielsweise in einem höheren Leistungsbereich betrieben werden, in dem der Verbrennungsmotor einen höheren Wirkungsgrad hat. Hierbei steht überschüssige Leistung zur Verfügung, da die angeforderte Leistung höher ist als die für den Fahrbetrieb erforderliche Leistung. Diese überschüssige Leistung kann dann über die elektrische Maschine 40 in die Batterie 46 eingespeist werden.

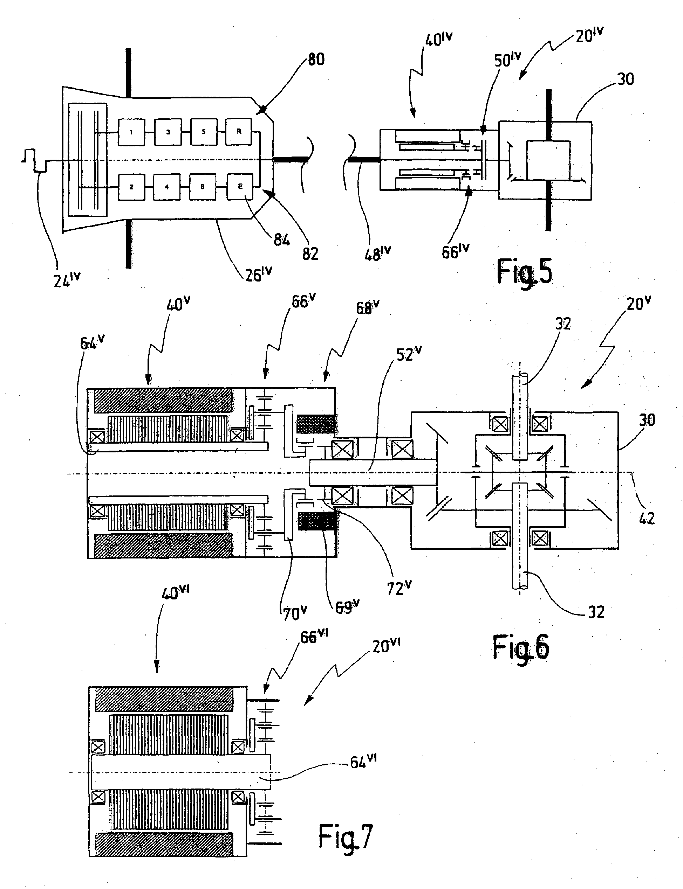

Figur 5 zeigt eine weitere Ausführungsform des erfindungsgemäßen Antriebsstranges 20^{IV}, die dies generell auch ermöglicht, da der Ausgang der elektrischen Maschine 40^{IV} über eine Schaltkupplung 66^{IV} mit der Kardanwelle 48^{IV} verbindbar ist. Die Kardanwelle 48^{IV} ist mittels einer Kupplung 50^{IV} mit dem Querdifferenzial 30 verbunden. Die Kupplung 50^{IV} kann vollständig getrennt werden. Demzufolge kann beispielsweise auch im Stillstand des Kraftfahrzeuges Leistung von dem Verbrennungsmotor 26^{IV} über die elektrische Maschine 40^{IV} in die Batterie gespeist werden (Standladen) und über die elektrische Maschine ist das Starten des Verbrennungsmotors möglich.

Wie es in Figur 5 dargestellt ist, ist das Getriebe 26^{IV} als Doppelkupplungsgetriebe ausgebildet, mit einem ersten Teilgetriebe 80, dem die Gangstufen 1, 3, 5, R zugeordnet sind, und mit einem zweiten Teilgetriebe 82, dem die Gangstufen 2, 4, 6 zugeordnet sind.

Das Standladen kann folglich so erfolgen, dass im Stillstand das erste Teilgetriebe 80 für einen Anfahrvorgang vorbereitet wird (die erste Gangstufe wird geschaltet, die zugeordnete Reibkupplung geöffnet). Ferner kann in dem zweiten Teilgetriebe 82 eine der Gangstufen 2, 4, 6 geschaltet und die zugeordnete Reibkupplung des Doppelkupplungsgetriebes geschlossen werden, um so Antriebsleistung über die Kardanwelle 48^{IV} zu der elektrischen Maschine 40^{IV} zu übertragen. Die Verbindung zu den Rädern der Hinterachse ist hierbei durch eine geeignete Aktuatorik zu trennen. Vorzugsweise kann zu diesem Zweck auch eine eigene Gangstufe E (Bezugsziffer 84) in dem Doppelkupplungsgetriebe 26^{IV} (genauer in dem zweiten Teilgetriebe 82) vorgesehen werden.

In den Figuren 6 und 7 sind weitere alternative Ausführungsformen von erfindungsgemäßen Antriebssträngen dargestellt. Bei diesen Ausführungsformen ist die Vorderachse 14 als rein elektrische Achse ausgebildet. Eine Kardanwelle 48 ist bei diesen Antriebssträngen nicht vorhanden. Auch ist folglich keine Hang-On-Kupplung 50 vorgesehen.

Bei dem Antriebsstrang 20^{V} ist die elektrische Maschine 40^{V} koaxial zu der Längsachse 42 vorgesehen. Der Rotor der elektrischen Maschine 40^{V} ist an einer Hohlwelle 64^{V} festgelegt, die sich in Richtung hin zu dem Querdifferenzial 30 erstreckt und mit einem Sonnenrad eines Planetenradsatzes 66^{V} verbunden ist. Ein Planetenträger des Planetenradsatzes 66^{V} ist mit einem Eingangsglied 70^{V} einer Schaltkupplung 68^{V} verbunden. Das Ausgangsglied 72^{V} der Schaltkupplung 68^{V} ist mit der Eingangswelle 52^{V} des Querdifferenzials 30 verbunden. Der Planetenradsatz 66^{V} liegt folglich zwischen der elektrischen Maschine 40^{V} und der Schaltkupplung 68^{V}.

Die Verwendung einer Hohlwelle 64^{V} für den Rotor hat den Vorteil, dass über eine Pumpe Öl durch die Hohlwelle dem Rotor als Kühlmedium zugeführt werden kann. Dies ist insbesondere bei schnelllaufenden Elektromotoren mit Permanentmagneten günstig, um die thermische Belastung der Magnete zu reduzieren. Zudem kann die Hohlwelle durch Zuführung von Öl über eine Pumpe zur Schmierung des Planetenradsatzes genutzt werden.

Alternativ kann die Welle des Rotors der elektrischen Maschine jedoch auch als Vollwelle ausgebildet sein, wie es in Figur 7 gezeigt ist. Figur 7 zeigt eine alternative Ausführungsform eines Antriebsstranges 20^{VI}, der hinsichtlich Aufbau und Funktion generell dem Antriebsstrang 20^{V} in Figur 6 entspricht. Einziger Unterschied ist es, dass die Welle des Rotors der elektrischen Maschine 40^{VI} als Vollwelle 65^{VI} ausgebildet ist, die mit dem Sonnenrad des Planetenradsatzes 66^{VI} verbunden ist.

Die oben beschriebenen Antriebsstränge lassen sich auch bei einem Kraftfahrzeug verwenden, bei dem die erste Achse 12 die Vorderachse und die zweite Achse 14 die Hinterachse ist.

## Patentansprüche

1. Antriebsstrang (20) für ein Kraftfahrzeug (10), das eine erste und eine zweite Achse (12, 14) aufweist, wobei eine erste, die erste Achse (12) antreibende Antriebseinheit (22) des Antriebsstrangs einen Verbrennungsmotor (24) sowie ein Getriebe (26^{IV}) mit mehreren Gangstufen aufweist und im Bereich der ersten Achse (12) näher an der ersten als an der zweiten Achse (12, 14) angeordnet ist und über eine Kardanwelle (48) auch die zweite Achse (14) antreiben kann, wobei der Antriebsstrang (20) ferner eine elektrische Maschine (40) als zweite Antriebseinheit aufweist, die im Bereich der zweiten Achse (14) näher an der zweiten als an der ersten Achse (12, 14) angeordnet ist und welche mit der zweiten Achse (14) und der Kardanwelle (48) verbindbar ist und wobei die elektrische Maschine (40) in Längsrichtung (42) des Kraftfahrzeugs (10) koaxial zu einer Eingangswelle (52) eines Querdifferenzials (30) der zweiten Achse (14) angeordnet ist,
**dadurch gekennzeichnet, dass** zum Laden einer Batterie (46) des Kraftfahrzeugs (10) im Stillstand des Kraftfahrzeugs (10)
eine Gangstufe (84) des Getriebes (26^{IV}) mit der elektrischen Maschine (40^{IV}) über die Kardanwelle (48) verbindbar ist, wobei das Getriebe (29^{IV}) ein Doppelkupplungsgetriebe mit zwei Teilgetrieben (80, 82) ist und wobei die mit der elektrischen Maschine (40^{IV}) verbindbare Gangstufe (84) in jenem Teilgetriebe (82) vorgesehen ist, das nicht die zum Anfahren gewöhnlich verwendete erste Gangstufe (1) aufweist.

2. Antriebsstrang nach Anspruch 1, wobei der elektrischen Maschine (40) ein Planetenradsatz (66) als Untersetzungsstufe zugeordnet ist, wobei der Planetenradsatz (66) koaxial zu der elektrischen Maschine (40) angeordnet ist, und wobei ein Sonnenrad des Planetenradsatzes (66) starr oder schaltbar mit einer Ausgangswelle (64) der elektrischen Maschine (40) verbunden ist.

3. Antriebsstrang nach einem der Ansprüche 1 bis 2, wobei der elektrischen Maschine (40) eine Schaltkupplung (68) zugeordnet ist, mittels der die elektrische Maschine (40) mit einer Kardanwelle (48) verbindbar ist, die die erste und die zweite Achse (12, 14) miteinander verbindet.

4. Antriebsstrang nach einem der Ansprüche 1 bis 3, wobei ein Ausgang der Antriebseinheit (22) über eine zu der Eingangswelle (52) des Querdifferenzials koaxiale Kardanwelle (48) mit einem Eingangsglied einer Hang-On-Kupplung (50) verbunden ist, deren Ausgangsglied mit der Eingangswelle (52) des Querdifferenzials der zweiten Achse verbunden ist.

5. Antriebsstrang nach Anspruch 4, wobei eine Schaltkupplung (68) und/oder ein Planetenradsatz (66), die der elektrischen Maschine (40) zugeordnet sind, zwischen der elektrischen Maschine (40) und der Hang-On-Kupplung (50) angeordnet sind.

6. Antriebsstrang nach Anspruch 5, wobei ein Eingangsglied der Hang-On Kupplung (50) mit einem ersten Glied eines Planetenradsatzes (66") starr verbunden ist, der der elektrischen Maschine (40") zugeordnet ist.

7. Antriebsstrang nach Anspruch 6, wobei eine Ausgangswelle der elektrischen Maschine (40") mit einem zweiten Glied des Planetenradsatzes (66") mittels einer Schaltkupplung (68") verbindbar ist.

8. Antriebsstrang nach Anspruch 6 oder 7, wobei das erste Glied der Planetenträger des Planetenradsatzes (66") ist und wobei das zweite Glied das Sonnenrad des Planetenradsatzes (66") ist.

9. Antriebsstrang nach einem der Ansprüche 1 bis 8, wobei die elektrische Maschine (40'; 40"; 40^{IV}) mittels einer Schaltkupplung (68'; 68") mit einer Kardanwelle (48) verbindbar ist, die die erste und die zweite Achse miteinander verbindet, und wobei die Kardanwelle (48) mittels einer Trennkupplung (50'; 50"; 50^{IV}) mit der Eingangswelle des Querdifferenzials (30) verbindbar bzw. davon trennbar ist.

10. Antriebsstrang nach Anspruch 9, wobei die Trennkupplung (50'; 50"; 50^{IV}) eine Hang-On-Kupplung ist, mittels der der zweiten Achse (14) bei Bedarf Antriebsleistung zur Verfügung gestellt werden kann.

11. Antriebsstrang nach einem der Ansprüche 1 bis 5, wobei der elektrischen Maschine (40"; 40^{V}; 40^{VI}) eine Schaltkupplung (68) zugeordnet ist, mittels der die elektrische Maschine mit der Eingangswelle (52"'; 52^{V}; 52^{VI}) des Querdifferenzials der zweiten Achse verbindbar ist.

12. Antriebsstrang nach Anspruch 11, wobei ein Rotor der elektrischen Maschine an einer Hohlwelle (64"'; 64^{V}) festgelegt und mittels der Schaltkupplung mit der Eingangswelle des Querdifferenzials verbindbar ist.

13. Antriebsstrang nach Anspruch 11 oder 12, wobei eine Schaltkupplung und/oder ein Planetenradsatz, die der elektrischen Maschine (40^{V}; 40^{VI}) zugeordnet sind, in Richtung von der ersten zur zweiten Achse gesehen hinter der elektrischen Maschine (40^{V}; 40^{VI}) angeordnet sind.

## Claims

1. Drivetrain (20) for a motor vehicle (10) which has a first and a second axle (12, 14), wherein a first drive unit (22) of the drivetrain, which drives the first axle (12), comprises a combustion engine (24) as well as a transmission (26^{IV}) having a plurality of gear stages, wherein the first drive unit (22) is arranged in the region of the first axles (12) closer to the first axle (12) than to the second axle (14), wherein the first drive unit (22) can also drive the second axle (14) via a cardan shaft, wherein the drivetrain (20), further, comprises an electric machine (40) as a second drive unit, which is arranged in the region of the second axle (14) closer to the second axle (14) than to the first axle (12), wherein the electric machine (40) can be connected to the second axle (14) and to the cardan shaft (48), and wherein the electric machine (40) is arranged in the longitudinal direction (42) of the motor vehicle (10) coaxially with respect to an input shaft (52) of a transverse differential (30) of the second axle (14),
**characterized in that**, for charging a battery (46) of the motor vehicle (10) at standstill of the motor vehicle (10), a gear stage (84) of the transmission (26^{IV}) can be connected to the electric machine (40^{IV}) via the cardan shaft (48), wherein the transmission (26^{IV}) is a dual-clutch transmission with two partial transmissions (80, 82), and wherein the gear stage (84) which can be connected to the electric machine (40^{IV}) is provided **in that** partial transmission (82) which does not have the first gear stage (1) conventionally used for starting.

2. Drivetrain according to Claim 1, with the electric machine (40) being assigned a planetary gear set (66) as a step-down stage, with the planetary gear set (66) being arranged coaxially with respect to the electric machine (40), and with a sun gear of the planetary gear set (66) being rigidly or shiftably connected to an output shaft (64) of the electric machine (40).

3. Drivetrain according to one of Claims 1 to 2, with the electric machine (40) being assigned a shift clutch (68) by means of which the electric machine (40) can be connected to a cardan shaft (48) which connects the first and second axles (12, 14) to one another.

4. Drivetrain according to one of Claims 1 to 3, with an output of the drive unit (22) being connected via a cardan shaft (48), which is coaxial with respect to the input shaft (52) of the transverse differential, to an input member of a hang-on clutch (50) whose output member is connected to the input shaft (52) of the transverse differential of the second axle.

5. Drivetrain according to Claim 4, with a shift clutch (68) and/or a planetary gear set (66), which are assigned to the electric machine (40), being arranged between the electric machine (40) and the hang-on clutch (50).

6. Drivetrain according to Claim 5, with an input member of the hang-on clutch (50) being rigidly connected to a first member of a planetary gear set (66") which is assigned to the electric machine (40^{II}).

7. Drivetrain according to Claim 6, with it being possible for an output shaft of the electric machine (40^{II}) to be connected to a second member of the planetary gear set (66^{II}) by means of a shift clutch (68").

8. Drivetrain according to Claim 6 or 7, with the first member being the planet carrier of the planetary gear set (66^{II}) and with the second member being the sun gear of the planetary gear set (66").

9. Drivetrain according to one of Claims 1 to 8, with it being possible for the electric machine (40^{I}; 40^{II}; 40^{IV}) to be connected by means of a shift clutch (68^{I}; 68^{II}) to a cardan shaft (48) which connects the first and second axles to one another, and with it being possible for the cardan shaft (48) to be connected to and separated from the input shaft of the transverse differential (30) by means of a separating clutch (50^{I}; 50"; 50^{IV}).

10. Drivetrain according to Claim 9, with the separating clutch (50^{I}; 50^{II}; 50^{IV}) being a hang-on clutch by means of which drive power can be provided to the second axle (14) on demand.

11. Drivetrain according to one of Claims 1 to 5, with the electric machine (40^{II}; 40^{V}; 40^{VI}) being assigned a shift clutch (68) by means of which the electric machine can be connected to the input shaft (52^{III}; 52^{V}; 52^{VI}) of the transverse differential of the second axle.

12. Drivetrain according to Claim 11, with a rotor of the electric machine being fixed to a hollow shaft (64^{III}; 64^{V}), and with it being possible for said rotor to be connected by means of the shift clutch to the input shaft of the transverse differential.

13. Drivetrain according to Claim 11 or 12, with a shift clutch and/or a planetary gear set which are assigned to the electric machine (40^{V}; 40^{VI}) being arranged behind the electric machine (40^{V}; 40^{VI}) as viewed in the direction from the first to the second axle.

## Revendications

1. Train d'entraînement (20) pour un véhicule automobile (10), qui présente un premier et un deuxième essieux (12, 14), dans lequel une première unité d'entraînement (22) du train d'entraînement, entraînait le premier essieu (12), présente un moteur à combustion interne (24) ainsi qu'une boîte de vitesses (26^{IV}) avec plusieurs rapports de vitesse et est disposée dans la région du premier essieu (12), plus près du premier que du deuxième essieu (12, 14), et peut aussi entraîner le deuxième essieu (14) au moyen d'un arbre à cardan (48), dans lequel le train d'entraînement (20) présente en outre une machine électrique (40) comme deuxième unité d'entraînement, qui peut être reliée au deuxième essieu (14) et dans lequel la machine électrique (40) est disposée en direction longitudinale (42) coaxialement à un arbre d'entrée (52) d'un différentiel transversal (30) du deuxième essieu (14), **caractérisé en ce que**, pour le chargement d'une batterie (46) du véhicule automobile (10) à l'arrêt du véhicule automobile (10), un rapport de vitesse (84) de la boîte de vitesses (26^{IV}) peut être relié par l'arbre à cardan (48) à la machine électrique (40^{IV}), dans lequel la boîte de vitesses (29^{IV}) est une boîte de vitesses à double embrayage avec deux boîtes de vitesses partielles (80, 82) et dans lequel le rapport de vitesses (84) pouvant être relié à la machine électrique (40^{IV}) est prévu dans la boîte de vitesses partielle (82), qui ne présente pas le rapport de vitesse (1) utilisé usuellement pour le démarrage.

2. Train d'entraînement selon la revendication 1, dans lequel un engrenage planétaire (66) est associé à la machine électrique (40) comme étage de réduction, dans lequel l'engrenage planétaire (66) est disposé coaxialement à la machine électrique (40), et dans lequel une roue solaire de l'engrenage planétaire (66) est reliée de façon rigide ou commutable à un arbre de sortie (64) de la machine électrique (40).

3. Train d'entraînement selon une des revendications 1 ou 2, dans lequel un embrayage de couplage (68) est associé à la machine électrique (40), au moyen duquel la machine électrique (40) peut être couplée à un arbre à cardan (48), qui relie l'un à l'autre le premier et le deuxième essieux (12, 14).

4. Train d'entraînement selon l'une quelconque des revendications 1 à 3, dans lequel une sortie de l'unité d'entraînement (22) est reliée par un arbre à cardan (48) coaxial à l'arbre d'entrée (52) du différentiel transversal à un organe d'entrée d'un embrayage Hang On (50), dont l'organe de sortie est relié à l'arbre d'entrée (52) du différentiel transversal du deuxième essieu.

5. Train d'entraînement selon la revendication 4, dans lequel un embrayage de couplage (68) et/ou un engrenage planétaire (66), qui sont associés à la machine électrique (40), sont disposés entre la machine électrique (40) et l'embrayage Hang On (50).

6. Train d'entraînement selon la revendication 5, dans lequel un organe d'entrée de l'embrayage Hang On (50) est relié rigidement à un premier organe d'un engrenage planétaire (66"), qui est associé à la machine électrique (40").

7. Train d'entraînement selon la revendication 6, dans lequel un arbre de sortie de la machine électrique (40") peut être couplé à un deuxième organe de l'engrenage planétaire (66") au moyen d'un embrayage de couplage (68").

8. Train d'entraînement selon la revendication 6 ou 7, dans lequel le premier organe est le porte-satellites de l'engrenage planétaire (66") et dans lequel le deuxième organe est la roue solaire de l'engrenage planétaire (66").

9. Train d'entraînement selon l'une quelconque des revendications 1 à 8, dans lequel la machine électrique (40'; 40"; 40^{IV}) peut être couplée au moyen d'un embrayage de couplage (68'; 68") à un arbre à cardan (48), qui relie l'un à l'autre le premier et le deuxième essieux (12, 14), et dans lequel l'arbre à cardan (48) peut être couplé à l'arbre d'entrée du différentiel transversal (30) ou séparé de celui-ci au moyen d'un embrayage de séparation (50'; 50^{II}; 50^{IV}).

10. Train d'entraînement selon la revendication 9, dans lequel l'embrayage de séparation (50'; 50"; 50^{IV}) est un embrayage Hang On, au moyen duquel une puissance d'entraînement peut au besoin être mise à la disposition du deuxième essieu (14).

11. Train d'entraînement selon l'une quelconque des revendications 1 à 5, dans lequel un embrayage de couplage (68) est associé à la machine électrique (40"; 40^{V}; 40^{VI}), au moyen duquel la machine électrique peut être couplée à l'arbre d'entrée (52"'; 52^{V}; 52^{VI}) du différentiel transversal du deuxième essieu.

12. Train d'entraînement selon la revendication 11, dans lequel un rotor de la machine électrique est attaché à un arbre creux (64"'; 64^{V}) et peut être couplé à l'arbre d'entrée du différentiel transversal au moyen de l'embrayage de couplage.

13. Train d'entraînement selon la revendication 11 ou 12, dans lequel un embrayage de couplage et/ou un engrenage planétaire, qui sont associés à la machine électrique (40^{V}; 40^{VI}), sont disposés derrière la machine électrique (40^{V}; 40^{VI}), en regardant dans la direction du premier essieu vers le deuxième essieu.
